Europäisches Patentamt

European Patent Office

Office européen des brevets

(11) Numéro de publication: **0 090 729**
**B1**

## (12) FASCICULE DE BREVET EUROPEEN

(45) Date de publication du fascicule du brevet:
16.10.85

(21) Numéro de dépôt: 83400612.4

(22) Date de dépôt: 24.03.83

(51) Int. Cl.⁴: **F 01 D 25/18, F 16 N 7/32**

(54) **Dispositif de graissage et de refroidissement d'un palier inter-arbres d'une turbomachine.**

(30) Priorité: 26.03.82 FR 8205598

(43) Date de publication de la demande:
05.10.83 Bulletin 83/40

(45) Mention de la délivrance du brevet:
16.10.85 Bulletin 85/42

(84) Etats contractants désignés:
**DE FR GB**

(56) Documents cités:
**FR - A - 1 360 906**
**FR - A - 1 446 066**
**FR - A - 2 243 366**
**FR - A - 2 424 413**
**US - A - 2 680 001**
**US - A - 3 243 243**
**US - A - 3 532 443**
**US - A - 3 915 521**
**US - A - 4 265 334**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Girault, Daniel Georges, 22 rue Dajot, F-77000 Melun (FR)**

(74) Mandataire: **Moinat, François, S.N.E.C.M.A. Service des Brevets Boîte Postale 81, F-91003 Evry Cedex (FR)**

ACTORUM AG

## Description

L'invention concerne un dispositif de graissage et de refroidissement d'un palier inter-arbres d'une turbomachine, comportant des moyens d'alimentation amenant le fluide de graissage consommable et l'air sous pression, et des moyens de distribution du fluide de graissage pulvérisé.

On connaît des dispositifs permettant la lubrification et le refroidissement de paliers comportant des roulements à rouleaux et tournant à des vitesses élevées et, en particulier, des dispositifs réalisant le graissage par un brouillard d'huile et d'air sous pression ou par un jet d'huile qui est ensuite évacué par l'air de refroidissement. Un tel dispositif est décrit dans le brevet français 1.235.469 et assure le graissage d'un palier à roulement logé dans un carter fixe. Le carter définit deux chambres: une chambre périphérique extérieure au palier et une chambre axiale le prolongeant. La chambre extérieure reçoit par une canalisation de l'air comprimé et communique avec la chambre axiale par des orifices dans lesquels passe également la buse d'amenée de l'huile sous pression. L'air comprimé enrobe le jet d'huile et évite sa pulvérisation avant son contact avec le roulement. Le mélange huile-air est évacué après avoir traversé le roulement. Ce dispositif est adapté à un palier disposé entre une partie fixe et un arbre et n'est pas transposable à un palier disposé entre deux arbres.

Le brevet français 2.359.975 concerne également le graissage d'un palier supportant l'extrémité d'un arbre de turbine. La bague externe du palier est maintenue dans un logement d'un boîtier fixe. La chambre définie entre l'extrémité de l'arbre et le logement est munie d'un distributeur annulaire recevant le fluide de graissage et de refroidissement et de l'air comprimé. Le fluide utilisé est du carburant injecté sous pression par la pompe principale. Le mélange air-carburant est projeté dans la cavité du palier par des passages axiaux du distributeur annulaire. Le mélange, après refroidissement et graissage du palier, s'échappe dans les gaz d'échappement du moteur par l'intermédiaire de passages prévus à cet effet. Comme dans le brevet précédent, le dispositif de graissage décrit n'est applicable qu'à un palier maintenu dans un carter fixe dans ou sur lequel peut être fixé le distributeur de fluide de graissage.

FR.A. 1 446 066 décrit un palier qui reçoit directement un brouillard d'huile servant à le refroidir et à le lubrifier à travers un perçage d'arbre ou d'élément fixe. Un agent de refroidissement, par exemple un mélange d'azote et d'air, est amené par des chambres annulaires disposées dans une chemise creuse constituant ainsi une barrière thermique entre le palier et les gaz ou éléments chauds.

US-A-3243243 concerne un ensemble de palier alimenté en huile dont une partie sert à la lubrification des éléments tournants et une autre partie au refroidissement d'une bague intérieure ou d'une bague extérieure, la circulation d'huile étant obtenue au moyen de la force centrifuge et en utilisant des rainures de forme adaptée.

Dans certaines applications, telles que celles visées par l'invention pour des turbomachines à hautes performances, la lubrification et le refroidissement obtenus seulement par circulation d'huile peuvent se révéler insuffisants et il est également avantageux d'obtenir la pulvérisation et l'obtention du mélange pulvérisé à proximité immédiate des zones de palier concernées. L'invention permet d'obtenir ces résultats avantageux.

Le dispositif, selon l'invention, est caractérisé en ce que les moyens de distribution de fluide de graissage pulvérisé comprennent une bague cylindrique disposée en amont du palier inter-arbres et sur l'arbre intérieur, formant une partie d'un joint labyrinthe et comportant dans son épaisseur des alvéoles ouverts sur la face amont et dans lesquels s'engage l'air sous pression, chaque alvéole présentant dans le fond un orifice de pulvérisation dirigé vers le palier et dans sa paroi intérieure un perçage approximativement radial, lesdits perçages coopérant avec les moyens d'alimentation en fluide de graissage comportant des ouvertures radiales dans la paroi de l'arbre intérieur débouchant dans une gorge prévue sur la surface intérieure de l'arbre intérieur et recevant le fluide de graissage d'une tubulure fixe passant à l'intérieur de l'arbre intérieur.

Le dispositif, selon l'invention, est particulièrement adapté à la lubrification et au refroidissement par fluide consommable, de paliers inter-arbres disposés entre deux arbres à vitesse de rotation différentes entraînant, par exemple, les corps basse pression et haute pression d'une turbomachine.

Les explications et figures données ci-après à titre d'exemple permettront de comprendre comment l'invention peut être réalisée.

La fig. 1 représente une demi-coupe axiale d'une partie d'une turbomachine comportant un dispositif de graissage et de refroidissement d'un palier disposé entre deux arbres, selon une première forme de réalisation de l'invention.

La fig. 2 est une demi-vue en coupe d'une deuxième forme de réalisation de l'invention.

La fig. 3 est une vue partielle selon III de la fig. 2.

La fig. 4 est une vue en perspective et en coupe selon IV-IV de la fig. 2.

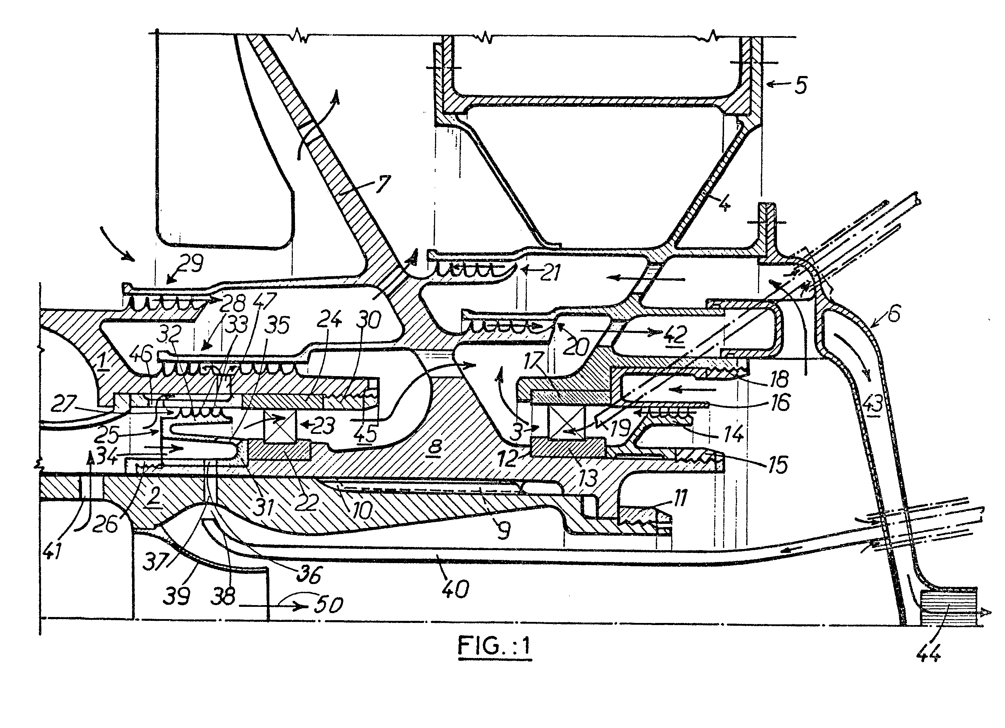

La fig. 1 montre en demi-coupe axiale une partie de turbomachine au niveau des arbres entraînant les corps basse pression et haute pression. L'arbre 1 du corps haute pression est concentrique, extérieur à l'arbre 2 du corps basse pression.

L'extrémité de l'arbre 2 du corps basse pression tourne dans un palier 3 maintenu par le support 4 d'un étage statorique de déviation 5 fermé par un carter d'extrémité 6. Le tourillon de rotor 7 du corps basse pression porte un moyeu 8 monté de manière connue sur l'extrémité de l'arbre 2. Ce moyeu est muni à sa périphérie intérieure de dents axiales 9 coopérant avec des rainures 10 portées par l'extrémité de l'arbre 2 et sur lesquelles il est maintenu par une bague filetée 11.

L'extrémité aval du moyeu 8 porte un épaulement 12 contre lequel vient buter la bague intérieure 13 du palier 3, qui est maintenue en place par l'intermédiaire d'une bague support de joint labyrinthe 14 immobilisée par une bague de serrage 15.

Le joint labyrinthe 14 coopère avec la surface intérieure d'une bague en U 16 qui maintient la bague extérieure 17 du palier 3. L'ensemble des bagues 16 et 17 est maintenu par une bague d'arrêt 18 vissée sur une partie du support 4 de l'étage statorique. Le palier 3 est lubrifié par un distributeur d'huile 19, en soi connu, fixé dans le carter 6. Le support 4 porte des extensions cylindriques axiales coopérant avec des extensions correspondantes du tourillon de rotor 7, présentant à leur surface des rainures, pour former des joints labyrinthes 20, 21. Ces extensions et ces joints labyrinthes 20, 21 définissent des enceintes dans lesquelles le contrôle des pressions et les surfaces déterminées sur lesquelles elles s'exercent permettent d'obtenir l'équilibrage axial des rotors.

L'extrémité amont du moyeu 8 porte un épaulement contre lequel vient s'appuyer la bague intérieure 22 du palier 23 dont la bague extérieure 24 est portée par l'extrémité de l'arbre 1 du corps haute pression. La bague intérieure 22 est bloquée en place, par l'intermédiaire d'au moins une partie du dispositif de graissage 25 selon l'invention, par une bague d'arrêt 26. La surface extérieure du dispositif porte des léchettes 33 formant avec une partie de la surface intérieure de l'arbre 1 un joint labyrinthe 27. La surface extérieure de l'arbre est prévue pour former avec des extensions annulaires du tourillon de rotor 7 des joints labyrinthes 28 et 29. La bague extérieure 24 du palier 23 est maintenue sur l'extrémité de l'arbre 1 de manière connue par une bague d'arrêt 30. Il est à noter que dans les différentes enceintes limitées notamment par ces joints labyrinthes 28 et 29, comme dans celles mentionnées ci-dessus limitées par les joints 20 et 21, on peut ajuster, d'une part, les pressions régnant dans les enceintes, notamment par un choix judicieux de l'étage du prélèvement, et, d'autre part, les surfaces sur lesquelles s'appliquent ces pressions pour annuler, ou du moins limiter, les forces longitudinales s'exerçant sur les rotors haute et basse pression.

L'étanchéité entre la veine des gaz et les arbres est obtenue par les joints labyrinthes et la contre-pression exercée par le flux d'air comprimé traversant les arbres et assurant leur refroidissement.

Le dispositif de graissage 25, selon la forme de réalisation représentée sur la fig. 1, comporte des moyens de distribution du fluide de graissage pulvérisé et est constitué d'une bague cylindrique 31 portant sur son bord extérieur amont une bague 32 coaxiale dont la surface extérieure présente les léchettes 33 formant une partie du joint labyrinthe 27.

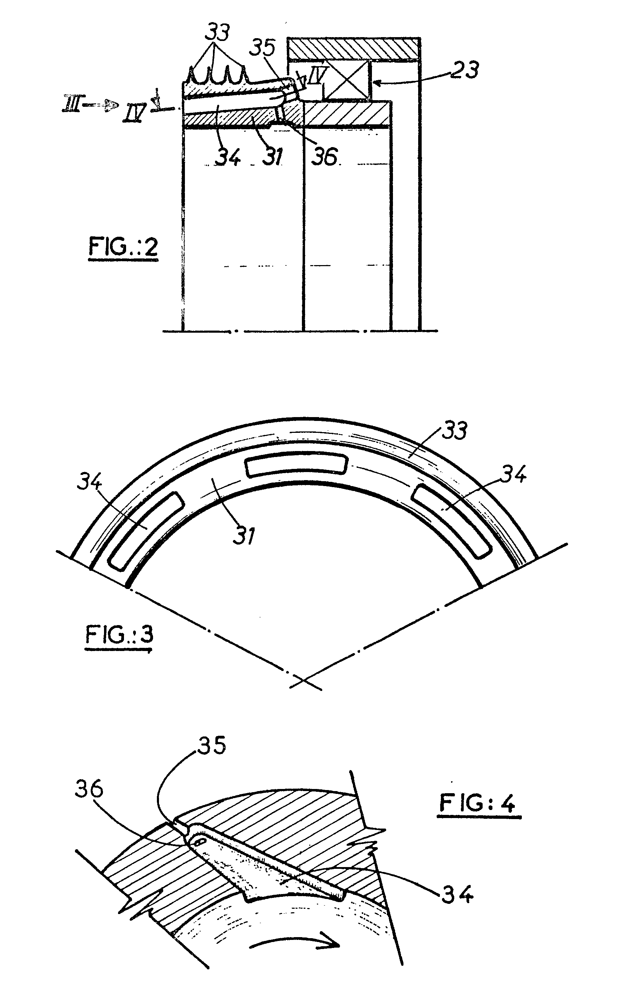

Selon une deuxième forme de réalisation représentée en coupe fig. 2, les léchettes 33 sont prévues directement sur la surface extérieure de la bague cylindrique 31. Selon la distance séparant les arbres 1 et 2, on choisira une bague d'une forme ou de l'autre.

La bague cylindrique 31 porte dans son épaisseur des alvéoles 34 (Fig. 1, 2, 3) inclinés par rapport à la direction axiale en allant de l'amont à l'aval, dans le sens contraire au sens de rotation des arbres (Fig. 4), ouverts dans la face amont de la bague et dont le fond est dirigé vers le palier.

L'alvéole 34 présente une largeur allant en diminuant vers le fond. Un orifice de pulvérisation 35, dirigé vers le palier, est prévu dans le fond ou près du fond.

Un perçage 36, sensiblement radial, réalisé dans la paroi intérieure de la bague, fait communiquer le fond de l'alvéole et les moyens d'alimentation en fluide de graissage qui comportent des ouvertures radiales 37 prévues dans la paroi de l'arbre 2. Ces ouvertures débouchent dans une gorge 38 à fond arrondi prévue sur la surface intérieure de l'arbre 2. Une pièce de révolution 39, approximativement tronconique est fixée sur le bord amont de la gorge pour dévier le flux d'air de refroidissement passant dans l'axe des arbres et créer une zone calme dans laquelle débouche l'extrémité d'une tubulure 40 d'amenée d'huile fixée dans le carter fixe 6 et passant axialement dans l'arbre creux central 2.

Le mode de fonctionnement du dispositif de graissage, selon l'invention, est ci-après décrit.

Les arbres 1 et 2 sont considérés en rotation et l'air de refroidissement provenant d'un étage préliminaire de compression ou de la soufflante traverse longitudinalement dans le sens de la flèche 50 (Fig. 1) les arbres creux 1, 2 et passe par diverses ouvertures pour refroidir certaines parties de la turbomachine ou pour exercer une contre-pression au niveau des joints labyrinthes.

L'huile arrive au goutte à goutte par la tubulure 40 et tombe dans la gorge 38. Sous l'effet de la force centrifuge, l'huile pénètre dans les ouvertu-res radiales 37, prévues dans la paroi de l'arbre 2, et dans les perçages 36 de la bague 31. L'huile giclant par les perçages est entraînée par l'air s'engouffrant dans l'alvéole 34 et provenant du flux central d'air de refroidissement au travers d'ouvertures 41 prévues radialement dans l'arbre 2 du corps basse pression. Ces ouvertures sont situées en amont par rapport aux alvéoles 34. L'huile et l'air forment à la sortie de l'orifice de pulvérisation 35 un brouillard qui traverse le palier 23 en le lubrifiant et le refroidissant avant d'être évacué dans le canal d'éjection via des enceintes 45 et 42, un tube 43 et un tube central 44.

L'orientation des alvéoles par rapport à l'axe de rotation et la diminution de leur section permettent une accélération de l'air dans la bague, favorisant la pulvérisation de l'huile qui arrive par les perçages 36.

Une partie de l'air délivré par les ouvertures 41 est centrifugé sur la paroi extérieure de la chambre 45 dans laquelle se trouve le palier 23 par l'intermédiaire des orifices 46 et 47 et assure la contre-pression au niveau du joint labyrinthe 28 avant d'être évacuée par le même chemin que le brouillard de graissage. La couche d'air ainsi formée sur la paroi de ou des chambres assure un isolement efficace des paliers contre le rayonnement de la veine de gaz passant dans les aubes de rotor et contribue ainsi à l'obtention d'un bilan thermique global satisfaisant.

## Revendications

1. Dispositif de graissage et de refroidissement d'un palier inter-arbres d'une turbomachine, le palier étant disposé entre un arbre intérieur concentrique à un arbre extérieur, ledit dispositif comportant des moyens d'alimentation en fluide de graissage consommable et en air sous pression, et des moyens de distribution du fluide de graissage pulvérisé, caractérisé en ce que les moyens de distribution de fluide de graissage pulvérisé comprennent une bague cylindrique (31), disposée en amont du palier inter-arbres (23) et sur l'arbre intérieur (2), formant une partie d'un joint labyrinthe (27) et comportant dans son épaisseur des alvéoles (34) ouverts sur la face amont et dans lesquels s'engage l'air sous pression, chaque alvéole présentant dans le fond un orifice de pulvérisation (35) dirigé vers le palier et dans sa paroi intérieure un perçage (36) approximativement radial, lesdits perçages coopérant avec les moyens d'alimentation en fluide de graissage comportant des ouvertures radiales (37) dans la paroi de l'arbre intérieur débouchant dans une gorge (38) prévue sur la surface intérieure de l'arbre intérieur et recevant le fluide de graissage d'une tubulure (40) fixe passant à l'intérieur de l'arbre intérieur.

2. Dispositif selon la revendication 1, caractérisé en ce que la bague cylindrique (31) porte sur sa surface extérieure des léchettes (33) formant avec la surface intérieure de l'arbre extérieur (1) un joint labyrinthe.

3. Dispositif selon la revendication 1, caractérisé en ce que la bague cylindrique (31) porte sur son bord extérieur amont une bague (32) coaxiale entourant ladite bague cylindrique, et portant sur sa surface extérieure des léchettes (33) formant avec la surface intérieure de l'arbre extérieur (1) un joint labyrinthe.

4. Dispositif selon l'une des revendications 1 à 3, caractérisé en ce que les alvéoles (34) sont inclinés par rapport à la direction axiale en allant de l'amont à l'aval, dans le sens contraire au sens de rotation des arbres.

5. Dispositif selon l'une des revendications 1 à 4, caractérisé en ce que les alvéoles (34) ont une largeur allant en diminuant vers le fond.

6. Dispositif selon l'une des revendications 1 à 5, caractérisé en ce que le bord amont de la gorge (38) prévue sur la surface intérieure de l'arbre intérieur (2) porte une pièce de révolution (39) approximativement tronconique pour dévier le flux d'air de refroidissement passant dans l'axe des arbres et créer une zone de calme dans laquelle débouche l'extrémité de la tubulure (40) d'amenée d'huile.

7. Dispositif selon l'une des revendications 1 à 6, caractérisé en ce qu'une bague d'arrêt (26) est prévue sur la surface extérieure de l'arbre intérieur pour bloquer l'une contre l'autre la bague intérieure (22) du palier (23) et la bague cylindrique (31).

## Patentansprüche

1. Schmier- und Kühleinrichtung für ein Zwischenwellenlager einer Turbomaschine, das zwischen einer inneren Welle und einer dazu konzentrischen äusseren Welle angeordnet ist, mit Mitteln zur Zuführung eines für den Verbrauch bestimmten Schmierfluids und von Druckluft sowie mit Mitteln zur Verteilung des zerstäubten Schmierfluids, dadurch gekennzeichnet, dass die Mittel zur Verteilung des zerstäubten Schmierfluids einen Zylinderring (31) umfassen, der stromaufwärts des Zwischenwellenlagers (23) auf der inneren Welle (2) angeordnet ist und Teil einer Labyrinthdichtung (27) bildet und der innerhalb seiner Wandung Zellen (34) aufweist, die auf der stromaufwärts gelegenen Seite offen sind und in die die Druckluft eindringt, dass jede der genannten Zellen an ihrem Boden eine auf das Lager gerichtete Zerstäubungsöffnung (35) und an ihrer Innenwandung eine annähernd radiale Bohrung (36) besitzt, und dass diese Bohrungen mit den Mitteln zur Zuführung des Schmierfluids zusammenwirken, die in der Wandung der inneren Welle angeordnete radiale Öffnungen (37) umfassen, welche in einer Kehle (38) münden, die an der Innenfläche der inneren Welle ausgebildet ist und die das Schmierfluid aus einem durch den inneren Hohlraum der inneren Welle verlaufenden festen Rohr (40) aufnimmt.

2. Einrichtung nach Anspruch 1, dadurch gekennzeichnet, dass der Zylinderring (31) an seiner Aussenfläche Lappen (33) trägt, die mit der Innenfläche der äusseren Welle (1) eine Labyrinthdichtung bilden.

3. Einrichtung nach Anspruch 1, dadurch gekennzeichnet, dass der Zylinderring an seinem stromaufwärts gelegenen äusseren Rand einen ihn koaxial umgebenden Ring (32) trägt, der an seiner Aussenseite Lappen (33) besitzt, die mit der Innenfläche der äusseren Welle (1) eine Labyrinthdichtung bilden.

4. Einrichtung nach einem der Ansprüche 1 bis 3, dadurch gekennzeichnet, dass die genannten Zellen (34) gegenüber der axialen Richtung geneigt sind und von der stromaufwärts gelegenen zur stromabwärts gelegenen Seite in der der Rotationsrichtung der Wellen entgegengesetzten Richtung verlaufen.

5. Einrichtung nach einem der Ansprüche 1 bis 4, dadurch gekennzeichnet, dass die Breite der Zellen (34) sich in Richtung auf ihren Boden verringert.

6. Einrichtung nach einem der Ansprüche 1 bis 5, dadurch gekennzeichnet, dass der stromaufwärts gelegene Rand der an der Innenseite der inneren Welle (2) vorgesehenen Kehle (38) ein annähernd kegelstumpfförmiges Drehteil (39) trägt, mittels dessen der durch die Achsen der Wellen tretende Kühlluftstrom umgelenkt und eine Ruhezone erzeugt wird, in der das Ende des Rohrs (40) zur Zuführung des Schmierfluids mündet.

7. Einrichtung nach einem der Ansprüche 1 bis 6, dadurch gekennzeichnet, dass auf der Aussenfläche der inneren Welle ein Haltering (26) vorgesehen ist, der den inneren Ring (22) des Lagers (23) und den Zylinderring (31) gegeneinander blockiert.

## Claims

1. Device for lubricating and cooling an inter-shaft bearing of a turbo-machine, the bearing being disposed between an interior shaft concentric with an exterior shaft, the said device comprising means for supplying consumable lubricating fluid and air under pressure, and means for distributing sprayed lubricating fluid, characterized in that the sprayed lubricating fluid distributing means comprise a cylindrical ring (31), disposed upstream of the inter-shaft bearing (23) and on the inner shaft (2), forming part of a labyrinth seal (27) and comprising in its thickness cavities (34) open on the upstream face and on which the pressurised air plays, each cavity having in the base a spray orifice (35) directed towards the bearing and in its inner wall an approximately radial port (36), said ports co-operating with the lubricating fluid supply means comprising radial apertures (37) in the wall of the inner shaft discharging into a groove (38) provided on the inner surface of the inner shaft and receiving the lubricating fluid from a fixed pipe (40) passing inside the inner shaft.

2. Device according to claim 1, characterized in that the cylindrical ring (31) carries on its outer surface fins (33) which co-operate with the inner surface of the outer shaft (1) to form a labyrinth seal.

3. Device according to claim 1, characterized in that the cylindrical ring (31) carries on its upstream outer edge a coaxial ring (32) surrounding the said cylindrical ring and carrying on its outer surface fins (33) which co-operate with the inner surface of the outer shaft (1) to form a labyrinth seal.

4. Device according to one of claims 1 to 3, characterized in that the cavities (34) are inclined in relation to the axial direction passing from upstream to downstream sides, in the opposite direction to the direction of rotation of the shafts.

5. Device according to one of claims 1 to 4, characterized in that the cavities (34) are of a width which diminishes towards the base.

6. Device according to one of claims 1 to 5, characterized in that the upstream edge of the groove (38) provided on the inner surface of the inner shaft (2) carries an approximately frusto-conical member of revolution (39) intended to divert the flow of cooling air passing axially of the shafts and to create a still zone into which the end of the oil supply pipe (40) discharges.

7. Device according to one of claims 1 to 6, characterized in that a stop ring (26) is provided on the outer surface of the inner shaft to lock the inner ring (22) of the bearing (23) and the cylindrical ring (31) one against the other.

FIG.:1

0 090 729

FIG.:2

FIG.:3

FIG:4